# FASCICULE DE BREVET EUROPEEN

(11) **EP 4 657 027 B1**
(45) Date de publication et mention de la délivrance du brevet: **28.10.2026**
(21) Numéro de dépôt: 25178577.0
(22) Date de dépôt: 23.05.2025
(51) Int. Cl.: G01D 3/08, G01D 7/00, G01L 5/24, F16B 31/02

(54) **SYSTEME ET PROCEDE DE MESURE SECURISES POUR AFFICHER ET TRANSMETTRE DES DONNEES INTEGRES**
SICHERES MESSSYSTEM UND VERFAHREN ZUR ANZEIGE UND ÜBERTRAGUNG VON INTEGRIERTEN DATEN
SECURE MEASUREMENT SYSTEM AND METHOD FOR DISPLAYING AND TRANSMITTING INTEGRATED DATA

(30) Priorité: 31.05.2024 FR 2405661
(43) Date de publication de la demande: 03.12.2025
(73) Titulaire: Airbus Helicopters, 13725 Marignane Cedex (FR); J.P.B SYSTEME, 77950 Montereau-Sur-Le-Jard (FR)
(72) Inventeur: BAILLY, Stéphane, 13480 Cabriès (FR); DEVILLIERS, Georges, 13009 Marseille (FR); BADIN, Brieuc, 77810 Thomery (FR); BEAUMEL, Jonathan, 77360 Vaires-sur-Marne (FR)
(74) Mandataire: GPI Brevets

(56) Documents cités:
- US-A1- 2012 191 378
- US-A1- 2015 247 745
- US-A1- 2018 223 891
- US-A1- 2022 308 951
- US-A1- 2022 319 342

## Description

La présente invention concerne un système et un procédé de mesure sécurisés pour afficher et transmettre des données intègres.

Un système de mesure peut comprendre un senseur communiquant avec un contrôleur distant. Le senseur émet un signal de mesure image de la valeur courante d'un paramètre. Le contrôleur distant reçoit le signal de mesure, le décode, et affiche une information image de la valeur courante du paramètre. Le contrôleur distant peut aussi transmettre des données au senseur.

En particulier, un assemblage boulonné peut comprendre deux pièces mécaniques serrées l'une contre l'autre à l'aide d'un système vis/écrou muni d'une portion filetée, d'un écrou et d'une rondelle. En utilisation, la portion filetée et l'écrou peuvent se desserrer, par exemple en présence de vibrations, en raison des conditions environnementales, voire en raison de l'usure de l'assemblage serré.

Pour limiter les risques de desserrage, l'écrou peut prendre la forme d'un écrou à freiner coopérant avec un frein. Selon un autre exemple, une rondelle de freinage est utilisée. Quelle que soit la variante, lors de l'assemblage des pièces mécaniques, un opérateur visse l'écrou à la tige filetée en appliquant un couple de serrage nominal prédéterminé à l'aide d'une clé dynamométrique. Le cas échéant, l'opérateur peut légèrement baisser ou augmenter le couple de serrage afin de positionner le frein. Du mastic peut en outre être appliqué.

En présence d'assemblages critiques, des actions de maintenance régulières peuvent avoir lieu afin de vérifier le serrage du système de vissage. La procédure de vérification d'un tel serrage peut comprendre une étape de retrait du mastic éventuel, de desserrage du système de vissage, puis une étape de resserrage au couple nominal, et éventuellement une étape de pose de mastic. De telles étapes peuvent être difficiles, sources d'erreurs humaines et longues à réaliser dans un environnement encombré et/ou difficile d'accès, par exemple au sein d'un système mécanique d'un aéronef.

Selon une autre technologie, un senseur de serrage et un contrôleur peuvent être utilisés. Le document WO2021/104679 A1 décrit ainsi une rondelle instrumentée pour déterminer une charge de serrage axiale. La rondelle instrumentée comprend un corps de rondelle annulaire. Au moins une jauge de déformation est disposée sur une paroi latérale circonférentielle externe du corps de rondelle. Cette jauge de déformation est configurée pour détecter une déformation du corps de rondelle due aux forces de serrage. La rondelle instrumentée comprend en outre un ensemble de communication connecté de manière opérationnelle à la ou aux jauges de déformation. L'ensemble de communication peut comprendre un circuit intégré adapté pour recevoir des signaux électriques provenant de la ou des jauges de déformation. Le ou les signaux électriques reçus peuvent être convertis en un signal porteur d'une charge de serrage axiale du système de vissage par le circuit intégré ou par un dispositif externe.

Ainsi, une rondelle instrumentée de ce type peut former un senseur mesurant une tension mécanique. Ce senseur communique alors avec un dispositif externe qui affiche une information relative au serrage.

Le document EP 4357626 A1 décrit un système de contrôle pour contrôler un serrage d'un système de vissage. Le système de contrôle comprend un système de mesure muni d'une rondelle instrumentée et d'un contrôleur. Le contrôleur est notamment configuré pour vérifier qu'une mesure faite par la rondelle instrumentée est dans une plage de conformité, par exemple basée sur une valeur de référence.

Les assemblages boulonnés sont critiques pour certaines applications et sont donc surveillés régulièrement. Le dysfonctionnement, et en particulier la perte d'intégrité, d'un système de mesure évaluant le serrage d'un tel assemblage boulonné peuvent donc avoir un impact de sécurité, par exemple au sein d'un véhicule voire d'un aéronef. La notion de perte d'intégrité correspond à une situation qui fait croire que le serrage est acceptable alors qu'il ne l'est pas. Une perte d'intégrité peut se produire en présence d'une valeur de référence erronée et/ou d'une mauvaise mesure. Par exemple, une valeur de référence erronée peut être mémorisée suite à un dysfonctionnement ou une erreur humaine. Selon un autre exemple, un contrôleur peut mal décoder un signal de mesure et/ou peut avoir un afficheur défectueux.

Une perte d'intégrité peut être facilement détectée par un utilisateur en présence de l'affichage d'une mesure aberrante. A titre d'exemple, si le contrôleur indique que la tension mécanique mesurée au sein d'un assemblage boulonné avec une rondelle instrumentée est égale à 50% de sa valeur de référence, l'utilisateur peut en déduire la présence d'un possible dysfonctionnement puisque la mesure évolue normalement peu dans le temps. Dans ce type de situation, l'utilisateur considère que la donnée est potentiellement incorrecte ou que le serrage est perdu. Cet utilisateur peut alors utiliser des moyens conventionnels, comme une clé dynamométrique, afin de vérifier l'état réel de l'assemblage examiné.

En revanche, l'identification d'une perte d'intégrité peut être délicate. A titre d'exemple, si la valeur renvoyée par un contrôleur est égale à 99% de la tension mécanique de référence tandis que le couple de serrage requis n'est plus appliqué, alors le système de mesure renvoie une donnée erronée mais plausible. L'utilisateur peut être leurré car l'information est conforme à l'attendu.

Les documents US 2022/308951 A1, US 2022/319342 A1, US 2018/223891 A1, US 2015/247745 A1, et US 2012/191378 A1 sont aussi connus.

La présente invention a alors pour objet de proposer un procédé et un système de mesure visant à limiter l'occurrence d'affichage d'informations erronées.

L'invention vise ainsi un système de mesure comprenant un senseur et un contrôleur configuré pour communiquer avec le senseur, le contrôleur comprenant un afficheur.

Le senseur comporte au moins deux ensembles de mesure et au moins un circuit de traitement, chaque ensemble de mesure comportant un ou plusieurs capteurs, ledit au moins un circuit de traitement étant connecté audit au moins un capteur de chaque ensemble de mesure, ledit au moins un circuit de traitement déterminant une valeur courante d'un même paramètre pour chaque ensemble de mesure à partir de signaux primaires émis par les capteurs des ensembles de mesure, ledit au moins un circuit de traitement étant configuré pour émettre vers le contrôleur un signal de mesure par ensemble de mesure fonction de ladite valeur courante mesurée déterminée à l'aide du ou des capteurs de cet ensemble de mesure et d'une valeur de référence mémorisée.

Le contrôleur est configuré pour :
i) transmettre la valeur de référence audit au moins un circuit de traitement lors d'une phase unique d'initialisation, ledit au moins un circuit de traitement ayant une mémoire configurée pour mémoriser la valeur de référence uniquement si la valeur de référence est égale à une marge près aux valeurs courantes,
ii) réceptionner les signaux de mesure et afficher sur l'afficheur des symboles respectifs lors d'une phase de mesure, chaque symbole étant fonction du signal de mesure respectif, les symboles étant au moins dissimilaires ou affichés alternativement.

L'expression « les symboles étant au moins dissimilaires ou affichés alternativement » signifie que les symboles sont dissimilaires et/ ou affichés alternativement.

Le senseur comporte donc au moins un premier ensemble de mesure et un deuxième ensemble de mesure. Le premier ensemble de mesure communique avec un circuit de traitement, qui lui est propre ou commun avec l'autre ensemble de mesure, connecté par une liaison filaire ou non filaire à au moins un premier capteur. De même, le deuxième ensemble de mesure communique avec un circuit de traitement, qui lui est propre ou commun avec l'autre ensemble de mesure, connecté par une liaison filaire ou non filaire à au moins un deuxième capteur. Chacun de ces capteurs mesure une valeur courante d'un même paramètre. Par exemple, chaque capteur comporte un pont de jauge pour mesurer une tension mécanique, la résistance électrique du capteur variant en fonction de cette tension mécanique. Le ou les circuits de traitement peuvent alors comprendre un calculateur, générant un signal de mesure en fonction d'une mesure du ou des capteurs et d'une valeur de référence. Le terme « calculateur » est à interpréter au sens large comme étant une unité apte à exécuter des instructions, un calculateur pouvant par exemple comprendre un microcontrôleur ou un microprocesseur voire d'autres organes. En outre, le senseur comporte au moins un émetteur/récepteur tel qu'une antenne dans le cadre d'une transmission sans fil ou d'un connecteur dans le cadre d'une transmission filaire.

Le contrôleur du système de mesure qui est muni d'un afficheur communique alors par une liaison filaire ou non filaire avec le senseur.

En outre, plusieurs modes de réalisation de l'invention se rapportant à un système de mesure sont envisagées en fonction du nombre et/ou de la nature du ou des circuits de traitement.

Selon un premier mode de réalisation de l'invention, le senseur peut comporter un unique circuit de traitement relié à chaque capteur, ce circuit de traitement mettant en œuvre au moins deux processus internes dissimilaires pour générer au moins deux dits signaux de mesure, et lors de la phase d'initialisation le circuit de traitement peut être configuré pour mémoriser la valeur de référence uniquement si la valeur de référence est égale à une marge près à chaque valeur courante.

Par exemple, l'unique circuit de traitement peut recevoir des signaux primaires émis par des capteurs, tels que des ponts de jauges présentant respectivement des résistances différentes. Un offset est alors mis en œuvre par le circuit de traitement au moyen d'amplificateurs de réception. Les signaux de mesure sont alors émis vers le contrôleur puis un codage dissimilaire est mis en œuvre dans le contrôleur pour chaque traitement réalisé par le circuit de traitement.

Selon un second mode de réalisation de l'invention, le senseur peut comporter au moins deux circuits de traitement et deux ensembles de mesure respectifs, chaque circuit de traitement étant relié à au moins un capteur de l'ensemble de mesure respectif et générant l'un desdits signaux de mesure en fonction de la valeur courante mesurée par ledit au moins un capteur de l'ensemble de mesure respectif et d'une valeur de référence mémorisée par ce circuit de traitement, et lors de la phase d'initialisation chaque circuit de traitement est configuré pour mémoriser la valeur de référence uniquement si la valeur de référence est égale à une marge près à la valeur courante déterminée par ce circuit de traitement.

Par exemple, le senseur est une rondelle instrumentée configurée pour être agencée au sein d'un assemblage boulonné, ledit paramètre mesuré étant une tension mécanique image d'un couple de serrage.

Lors d'une phase d'initialisation, un opérateur saisit, à l'aide d'une interface dédiée, la valeur de référence sur le contrôleur, qui la transmet à l'unique circuit de traitement dans le cas de la première variante ou à chaque circuit de traitement dans le cas du second mode de réalisation de l'invention. Le ou les circuits de traitement mémorisent cette valeur de référence uniquement si elle est égale à une marge près à la ou les valeurs courantes déterminées par le ou les circuits de traitement.

La mémorisation de la valeur de référence est importante, puisque les valeurs courantes mesurées par la suite lors des phases de mesure sont comparées à cette valeur de référence. Or, une erreur humaine est malheureusement possible.

Dans le cadre d'un assemblage boulonné, l'opérateur saisit la valeur de référence et serre l'assemblage boulonné avec une clé dynamométrique au couple de serrage souhaité, le couple de serrage appliqué ayant un lien direct avec la tension mécanique mesurée. Ce lien dépend par exemple du pas du filetage, du diamètre à flanc de filet, du rayon moyen d'appui sous la partie tournante, du coefficient de frottement. Le ou chaque circuit de traitement compare alors la tension mécanique mesurée à la valeur de référence qui prend la forme d'une tension mécanique de référence. L'enregistrement de la valeur de référence ne sera réalisé par le ou chaque circuit de traitement que si la valeur courante qu'il mesure correspond à la valeur de référence attendue, aux incertitudes de mesure près. Dans la négative, un circuit de traitement peut transmettre un signal d'erreur au contrôleur pour le signaler à l'opérateur. Ainsi, le contrôleur ne peut pas déclencher l'enregistrement d'une valeur de référence erronée ce qui sécurise de fait le système. De même, un mauvais réglage de la clé dynamométrique sera aussi détecté en ne permettant pas de mémoriser la valeur de référence. Le couple appliqué avec la clé dynamométrique, exprimé en Newton-mètre (Nm), et la tension mécanique, exprimée en Décanewton (daN) sont liés par les caractéristiques physiques de l'assemblage, mais ont des valeurs et unités différentes, ceci permet de réduire très significativement le risque d'erreur humaine, ainsi que le mauvais réglage de la clé.

De plus, lors de la phase de mesure, le ou les circuits de traitement génèrent un signal de mesure par ensemble de mesure. Selon la première réalisation, l'unique circuit de traitement génère lesdits signaux de mesure. Selon la deuxième réalisation et en présence de deux ensembles de mesure, le premier circuit de traitement et le deuxième circuit de traitement émettent vers le contrôleur respectivement un premier signal de mesure et un deuxième signal de mesure. Chaque signal de mesure est fonction de la valeur courante mesurée par le circuit de traitement concerné et de la valeur de référence mémorisée par ce même circuit de traitement, ou d'une valeur commune consolidée par les deux circuits de traitement. Chaque signal de mesure peut par exemple être porteur de la valeur courante mesurée par le circuit de traitement correspondant, sous la forme d'un pourcentage de la valeur de référence.

Le contrôleur affiche alors un premier symbole illustrant la première mesure transmise par le premier ensemble de mesure et un deuxième symbole illustrant la deuxième mesure transmise par le deuxième ensemble de mesure.

Le procédé mis en œuvre au niveau du contrôleur considère que le senseur est un équipement de haute intégrité. Les données transmises par le senseur sont soit cohérentes et justes, soit différentes et non valables. Les capteurs des ensembles de mesure peuvent par exemple être réglés différemment et peuvent être comparés. A titre illustratif, pour une même tension mécanique au sein d'un assemblage boulonné, le premier capteur du premier ensemble de mesure peut générer une tension électrique de 3 Volts et le deuxième capteur du deuxième ensemble de mesure peut générer une tension électrique de 4 volts. Le ou les circuits de traitement peuvent comparer la cohérence des mesures et générer le cas échéant une alerte.

Le cas de données cohérentes et fausses, correspondant à une perte d'intégrité du senseur, est donc exclu grâce à des mécanismes de sécurité et notamment par l'emploi de deux ensembles de mesure distincts et indépendants. Un contrôle de redondance cyclique généré à partir de polynômes générateurs différents peut aussi être entrepris pour sécuriser le stockage et/ou la transmission des mesures.

Après un traitement, le contrôleur décode chaque signal de mesure avec l'algorithme approprié, puis affiche les symboles correspondants. Les symboles sont affichés différemment à savoir sous plusieurs formats différents et/ou à plusieurs endroits différents sur l'afficheur et/ou à des instants différents. Le système fonctionne de fait normalement si les symboles correspondent l'un à l'autre. A l'inverse, si les données issues des deux ensembles de mesure sont différentes, ou si le contrôleur dysfonctionne, des incohérences d'affichage apparaissent de manière évidente pour l'opérateur.

Ainsi, un système de mesure selon l'invention permet d'une part de sécuriser la saisie d'une valeur de référence lors de la phase d'initialisation et, d'autre part, de consolider les mesures transmises et affichées lors d'une phase de mesure. Un tel système de mesure limite ainsi d'une part l'occurrence d'affichage de données non intègres, aussi appelées « données erronées », et d'autre part l'occurrence de la mémorisation d'une mauvaise valeur de référence qui fausserait les lectures suivantes.

Le système de mesure peut en outre comporter une ou plusieurs des caractéristiques qui suivent, prises seules ou en combinaison.

Selon une possibilité, les signaux de mesure peuvent être codés différemment.

Pour garantir l'intégrité du senseur, le ou les circuits de traitement peuvent coder différemment les signaux de mesure. Ainsi, un premier circuit de traitement peut coder la valeur déterminée à l'aide de la mesure du ou des premiers capteurs et de la valeur de référence qu'il mémorise en binaire, alors qu'un deuxième circuit de traitement code la valeur déterminée à l'aide de la mesure du ou des deuxièmes capteurs et de la valeur de référence qu'il mémorise en binaire avec un complément à 2.

Selon une possibilité d'affichage, lesdits symboles peuvent comporter un premier symbole qui comprend un nombre affiché sous une forme numérique et un deuxième symbole porteur d'un nombre affiché sous une forme alphabétique.

A titre d'exemple, le premier symbole est le nombre « 11 » alors que le deuxième symbole est le mot « onze ». Le premier symbole et le deuxième symbole sont donc porteurs de la même information dans ces conditions. Un utilisateur constate visuellement que le système de mesure fonctionne correctement. En revanche, si le premier symbole est le nombre « 15 » alors que le deuxième symbole est le mot « onze », l'opérateur constate visuellement que le système de mesure dysfonctionne.

Cette possibilité permet donc à un utilisateur d'identifier aisément et rapidement si le système de mesure fonctionne correctement.

Selon une possibilité d'affichage, lesdits symboles peuvent comporter un premier symbole et un deuxième symbole présentés sous la même forme, ladite forme étant soit une forme numérique soit une forme alphabétique soit une forme graphique, le premier symbole et le deuxième symbole étant affichés alternativement à une même position sur l'afficheur.

Lorsque le système de mesure fonctionne correctement, l'utilisateur verra un symbole stable. A l'inverse, en cas de dysfonctionnement, l'utilisateur verra deux symboles différents superposés et instables.

Par exemple, le premier symbole et le deuxième symbole sont de couleurs différentes, voire sont affichés selon une fréquence élevée et par exemple supérieur à 18 Hz.

En l'absence de dysfonctionnement, l'utilisateur doit observer une couleur correspondant à la synthèse des couleurs des symboles, en raison du phénomène de rémanence rétinienne. Dans la négative, l'information sera considérée comme invalide par l'opérateur.

Eventuellement, la couleur attendue peut être affichée sur l'afficheur par le contrôleur pour comparaison.

Un résultat similaire peut être obtenu en utilisant des couleurs différentes et des niveaux de transparence particuliers. Ces différentes méthodes peuvent être combinées.

Selon une possibilité d'affichage, lesdits symboles peuvent comporter un premier symbole affichant la valeur courante associée sous la forme d'un pourcentage de la valeur de référence associée écrit de manière numérique ou alphabétique, le deuxième symbole comportant une échelle et un index pointant sur l'échelle la valeur courante associée sous la forme d'un pourcentage de la valeur de référence associée.

Le terme « échelle » est à interpréter au sens large, et désigne un symbole s'étendant d'une origine jusqu'à un point illustrant la valeur de référence. Par exemple, l'échelle et l'index peuvent former un graphique dit en « camembert". Alternativement, l'échelle peut aussi prendre la forme d'un bandeau rempli de l'origine jusqu'à l'index, ou encore la forme d'une échelle en tant que telle graduée ou non par exemple.

Cette possibilité permet donc à un utilisateur d'identifier aisément et rapidement si le système de mesure fonctionne correctement.

En outre, cette variante peut offrir la possibilité d'utiliser une donnée de nature totalement différente des mesures pour augmenter le niveau de sécurité.

En effet, le contrôleur peut être configuré pour transmettre audit au moins un circuit de traitement pilotant le deuxième symbole des coordonnées sur l'afficheur d'un pixel de début et d'un pixel de fin de ladite échelle, les signaux de mesure émis par ledit au moins un circuit de traitement étant porteurs de coordonnées dudit index sur l'afficheur, ledit au moins un circuit de traitement étant configuré pour déterminer lesdites cordonnées dudit index en fonction du pixel de début, du pixel de fin, de la valeur de référence mémorisée dans ledit au moins un circuit de traitement et de la valeur courante déterminée pour chaque ensemble de mesure.

Le circuit de traitement concerné est ainsi configuré pour appliquer une loi mémorisée donnant les coordonnées dudit index en fonction du pixel de début, du pixel de fin, de la valeur de référence et de la ou des mesures du ou des capteurs associés.

Les natures numérique et graphique de la même donnée sous des formes de chiffres et de coordonnées de pixel sont fondamentalement différentes. La survenue d'un dysfonctionnement susceptible d'affecter de la même manière ces deux informations dissimilaires n'est pas réaliste ce qui permet de sécuriser le système. Le circuit de traitement et le contrôleur ne connaissent pas le lien entre ces deux formats (numérique, et échelle analogique). A l'inverse, l'opérateur peut aisément vérifier la cohérence de l'ensemble des informations affichées.

Selon une possibilité compatible avec les précédentes, si la valeur de référence n'est pas égale à une marge près à la valeur courante déterminée par ledit au moins un circuit de traitement, ce ou ces circuits de traitement peuvent être configurés pour ne pas mémoriser la valeur de référence et pour transmettre un signal d'alerte lors de la phase d'initialisation.

La mémorisation de la valeur de référence garantit alors le bon déroulement de la phase d'initialisation, et de la phase de serrage initiale dans le cadre d'une rondelle instrumentée.

Selon une possibilité compatible avec les précédentes, lors de la phase d'initialisation le contrôleur et le senseur peuvent être configurés pour mettre en œuvre une phase interactive de vérification comprenant une manœuvre humaine d'au moins une interface du contrôleur, le ou les circuits de traitement étant configurés pour mémoriser ladite valeur de référence en fonction d'une issue de la phase interactive de vérification.

Cette phase interactive interdit l'enregistrement de la valeur de référence en cas d'erreur humaine, ou lorsque le contrôleur ne fonctionne pas correctement.

Par exemple, lors de la phase interactive de vérification, ledit au moins un circuit de traitement peut être configuré pour transmettre des cordonnées polaires au contrôleur par rapport à un référentiel de l'afficheur, le contrôleur étant configuré pour afficher sur l'afficheur un curseur à une position prédéterminée, par exemple sur un centre d'un référentiel, et une zone de validation, un point de référence de la zone de validation ayant pour coordonnées dans le référentiel lesdites coordonnées polaires, le contrôleur ayant une interface homme-machine de déplacement déplaçant le curseur selon deux directions orthogonales par incrément de déplacement pour permettre à un utilisateur de placer le curseur dans la zone de validation, le contrôleur ayant une interface homme-machine de validation, le contrôleur étant configuré suite à une sollicitation de l'interface homme-machine de validation pour transmettre au senseur deux nombres d'incréments de déplacement respectivement selon les deux directions, ledit au moins un circuit de traitement étant configuré pour valider la mémorisation si les deux nombres d'incréments correspondent aux coordonnées polaires selon une loi mémorisée.

En présence de plusieurs circuits de traitement, un des circuits de traitement prédéterminé peut être configuré pour mettre en œuvre cette phase.

Cette caractéristique permet de garantir qu'un enregistrement de la valeur de référence est réellement demandé par un opérateur. Le senseur vérifie la cohérence entre le déplacement du curseur et l'emplacement demandé de la zone de validation. Les deux valeurs des incréments de déplacement respectivement selon les deux directions résultent d'un acte de l'opérateur réalisé en interprétant graphiquement les informations affichées, et ne peut pas être le résultat d'une panne/erreur du contrôleur.

Outre un système de mesure, l'invention vise aussi un véhicule comportant ce système de mesure.

Outre un système de mesure, l'invention vise un procédé de mesure comprenant les diverses étapes mises en œuvre par le système précité.

L'invention vise ainsi un procédé de mesure pour mesurer un paramètre avec un senseur et un contrôleur configuré pour communiquer avec le senseur, le contrôleur comprenant un afficheur.

Le senseur comportant au moins deux ensembles de mesure et au moins un circuit de traitement, chaque ensemble de mesure comportant un ou plusieurs capteurs, ledit au moins un circuit de traitement étant connecté audit au moins un capteur de chaque ensemble de mesure, ledit au moins un circuit de traitement déterminant une valeur courante d'un même paramètre pour chaque ensemble de mesure à partir de signaux primaires émis par les capteurs des ensembles de mesure, ledit au moins un circuit de traitement étant configuré pour émettre vers le contrôleur un signal de mesure par ensemble de mesure fonction de ladite valeur courante déterminée à l'aide du ou des capteurs de cet ensemble de mesure et d'une valeur de référence mémorisée.

Un tel procédé comporte les étapes suivantes:
i) lors d'une phase d'initialisation, transmission avec le contrôleur de ladite valeur de référence audit au moins un circuit de traitement du senseur, et pour ledit au moins un circuit de traitement : mémorisation dans une mémoire dudit au moins un circuit de traitement de la valeur de référence uniquement si la valeur de référence est égale, à une marge près, aux valeurs courantes,
ii) lors d'une phase de mesure, émission des signaux de mesure par ledit au moins un circuit de traitement et réception des signaux de mesure par le contrôleur, puis affichage sur l'afficheur d'au moins un symbole par signal de mesure, chaque symbole étant fonction du signal de mesure respectif, les symboles étant au moins dissimilaires ou affichés alternativement,

Le procédé peut aussi notamment comporter les étapes précédemment décrites dans le cadre de la description du système de mesure.

L'invention et ses avantages apparaîtront avec plus de détails dans le cadre de la description qui suit avec des exemples donnés à titre illustratif en référence aux figures annexées qui représentent :
la figure 1, un schéma illustrant une phase d'initialisation réalisée avec un système de mesure selon un premier mode de réalisation de l'invention,
la figure 2, un schéma illustrant une phase d'initialisation réalisée avec un système de mesure selon un second mode de réalisation de l'invention,
la figure 3, un schéma illustrant une phase de mesure réalisée avec un système de mesure selon le second mode de réalisation de l'invention,
la figure 4, un schéma illustrant une phase de mesure réalisée avec un système de mesure selon le second mode de réalisation de l'invention,
la figure 5, un schéma illustrant une phase de mesure réalisée avec un système de mesure selon le second mode de réalisation de l'invention, et
la figure 6, une vue d'un système de mesure selon l'invention agencé au sein d'un assemblage boulonné d'un véhicule.

Les éléments présents dans plusieurs figures distinctes sont affectés d'une seule et même référence.

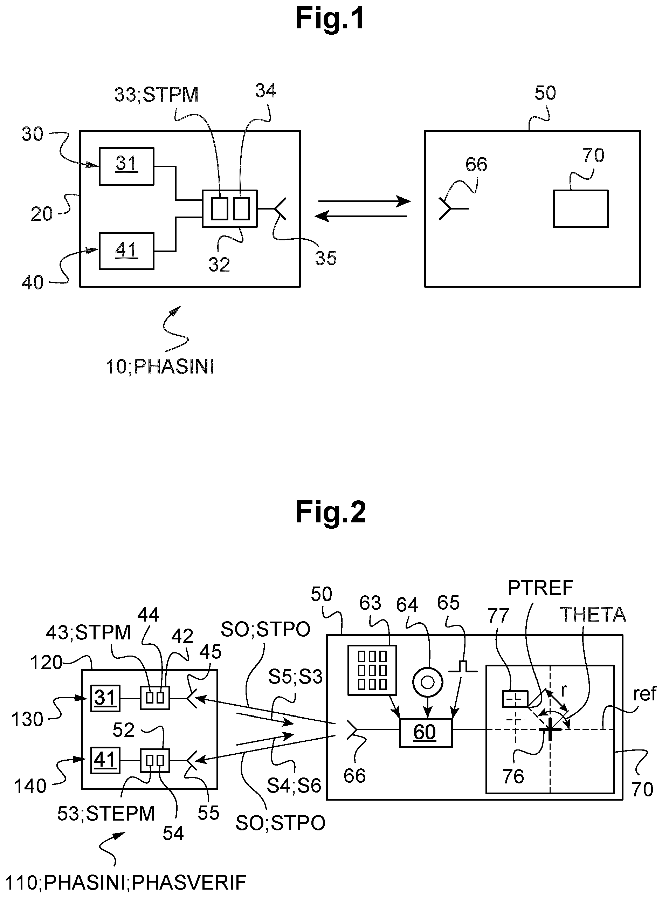

La figure 1 illustre un système de mesure 10 selon un premier mode de réalisation de l'invention. Ce système de mesure 10 comprend un senseur 20 et un contrôleur 50 configuré pour communiquer avec le senseur 20.

En particulier, le senseur 20 comporte au moins deux ensembles de mesure 30, 40. Le senseur 20 comporte un unique circuit de traitement 32 connecté aux capteurs 31, 41, les divers capteurs 31, 41 permettant de mesurer chacun une valeur courante d'un même paramètre. Les capteurs 31, 41 peuvent être portés par un même support, par exemple au sein d'une rondelle instrumentée, d'une tête de vis ou autres. Le circuit de traitement 32 peut être déporté par rapport aux capteurs, ou peut aussi être porté par le support.

Par exemple, chaque capteur 31, 41 peut comprendre une jauge de déformation pour évaluer une déformation d'un support selon une direction.

En particulier, le senseur 20 peut être un senseur de tension mécanique, chaque capteur 31, 41 ayant une jauge de déformation générant une tension électrique variant avec la tension mécanique au sein d'un assemblage boulonnée. Dans ce cas, le senseur 20 peut comprendre un ou des éléments du système décrit dans le document WO2021/104679 A1. Par exemple, le senseur 20 comprend un corps annulaire, chaque ensemble de mesure 30, 40 ayant au moins une jauge de déformation disposée sur une paroi latérale circonférentielle externe du corps de rondelle. Le circuit de traitement 32 reçoit un signal électrique provenant de la ou des jauges de déformation de son ensemble de mesure, et le convertit en un signal porteur d'une tension mécanique.

Néanmoins, l'invention est applicable à tout type de senseurs.

Le circuit de traitement 32 comporte un calculateur 34 et une mémoire 33 pour mémoriser au moins une valeur de référence. Le calculateur 34 est notamment configuré, par exemple en exécutant des instructions mémorisés dans la mémoire 33, pour : a) calculer pour chaque ensemble de mesure une valeur courante du paramètre mesuré à partir du ou de signaux émis par le ou les capteurs 31, 41 de cet ensemble de mesure, b) mémoriser, lors d'une phase d'initialisation décrite par la suite, la valeur de référence dans la mémoire 33 du circuit de traitement 32 dans des conditions prédéterminées et en fonction des valeurs courantes déterminées, c) pour générer un signal de mesure par ensemble de mesure lors d'une phase de mesure.

Le calculateur 34 peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur... Le circuit de traitement 32 peut par exemple comprendre un microcontrôleur muni d'un calculateur 34 et d'une mémoire 33.

Le circuit de traitement 32 est en outre relié à un émetteur/récepteur 35, apte à communiquer avec le contrôleur 50. Un tel émetteur/récepteur 35 peut exemple comprendre une antenne dans le cadre d'une liaison non filaire, ou un connecteur. Le circuit de traitement 32 peut communiquer avec son propre émetteur/récepteur 35 selon l'exemple illustré apte à communiquer avec un émetteur/récepteur 66 du contrôleur 50.

Les ensembles de mesure 30,40 peuvent en outre comporter une source d'alimentation électrique. Alternativement, les ensembles de mesure 30,40 peuvent être alimentés électriquement par le contrôleur 50, par exemple par le biais d'un système RFID.

La figure 2 illustre un système de mesure 110 selon un second mode de réalisation de l'invention. Ce système de mesure 110 comprend un senseur 120 et un contrôleur 50 configuré pour communiquer avec le senseur 120.

En particulier, le senseur 120 comporte au moins deux ensembles de mesure 130, 140. Chaque ensemble de mesure 130, 140 communique avec son propre circuit de traitement 42, 52 connecté à son ou ses propres capteurs 31, 41, les divers capteurs 31, 41 permettant de mesurer chacun une valeur courante d'un même paramètre.

Par ailleurs, chaque circuit de traitement 42, 52 comporte un calculateur 44, 54 et une mémoire 43, 53 pour mémoriser au moins une valeur de référence. Chaque calculateur 44, 54 est notamment configuré, par exemple en exécutant des instructions mémorisés dans la mémoire 43, 53, pour : a) calculer une valeur courante du paramètre mesuré à partir du ou de signaux émis par le ou les capteurs 31, 41 de son ensemble de mesure 130, 140, b) mémoriser, lors d'une phase d'initialisation décrite par la suite, la valeur de référence dans la mémoire 43, 53 du circuit de traitement 42, 52 dans des conditions prédéterminées et en fonction de la valeur courante déterminée, c) pour générer un signal de mesure lors d'une phase de mesure.

Chaque calculateur 44, 54 peut comprendre par exemple au moins un processeur et au moins une mémoire, au moins un circuit intégré, au moins un système programmable, au moins un circuit logique, ces exemples ne limitant pas la portée donnée à l'expression « calculateur ».

Dans ce cas, indépendamment de la nature des capteurs 31,41, le senseur 120 comporte donc un premier ensemble de mesure 130 comprenant un ou des premiers capteurs 31 en communication via une liaison filaire ou non filaire avec un premier circuit de traitement 42 relié à un premier émetteur/récepteur 45, ainsi qu'un deuxième ensemble de mesure 140 comprenant un ou des deuxièmes capteurs 41 en communication via une liaison filaire ou non filaire avec un deuxième circuit de traitement 52 relié à un deuxième émetteur/récepteur 55, le premier et le deuxième émetteur-récepteur 45,55 pouvant être distincts ou former un seul et même émetteur/récepteur pour communiquer avec le contrôleur 50.

Quelle que soit la réalisation, le contrôleur 50 comprend un afficheur 70. L'afficheur 70 est piloté par un gestionnaire 60 relié à un émetteur/récepteur 66. Le gestionnaire 60 peut comprendre par exemple au moins un processeur et au moins une mémoire, au moins un circuit intégré, au moins un système programmable, au moins un circuit logique, ces exemples ne limitant pas la portée donnée à l'expression « gestionnaire ». Le terme processeur peut désigner aussi bien une unité centrale de traitement connue sous l'acronyme CPU, une unité graphique de traitement GPU, une unité digitale connue sous l'acronyme DSP, un microcontrôleur...

Le gestionnaire 60 est configuré pour effectuer des actions prédéterminées, par exemple en appliquant des instructions mémorisées. Le gestionnaire 60 a notamment pour fonction de contrôler si besoin le senseur 120 et de traiter les signaux de mesure transmis par le senseur 120.

A cet effet, le gestionnaire 60 est connecté par une liaison filaire ou non filaire à un émetteur/récepteur 66 apte à communiquer avec le senseur 120. De plus, le gestionnaire 60 est connecté par une liaison filaire ou non filaire à une ou des interfaces homme-machine 63, 64, 65.

Par exemple, le gestionnaire 60 est connecté par une liaison filaire ou non filaire à une interface homme-machine de saisi 63 permettant de saisir une valeur de référence. Par exemple, une telle interface peut prendre la forme d'un clavier, d'un organe tactile ou autres.

Par exemple, le gestionnaire 60 est connecté par une liaison filaire ou non filaire à une interface homme-machine de déplacement 64 pour requérir le déplacement d'un curseur sur l'afficheur 70. A titre illustratif, une telle interface peut prendre la forme d'un bouton mobile en rotation autour de deux axes, de plusieurs boutons, etc.

Par exemple, le gestionnaire 60 est connecté par une liaison filaire ou non filaire à une interface homme-machine de validation 65 pour valider une action. A titre illustratif, une telle interface peut prendre la forme d'un bouton poussoir, d'une face tactile, etc.

Tel qu'illustré sur la figure 2, le contrôleur 50 est configuré pour transmettre la valeur de référence à chaque circuit de traitement 42, 52, chaque circuit de traitement 42, 52 étant configuré pour mémoriser dans sa mémoire 43, 53 la valeur de référence uniquement si cette valeur de référence est égale à une marge près à la valeur courante mesurée.

Ainsi, un opérateur peut paramétrer la valeur de référence en sollicitant l'interface homme-machine de saisi 63. Cette interface homme-machine de saisi 63 transmet un signal au gestionnaire 60 qui émet un signal de paramétrage S0 porteur de la valeur de référence saisie à l'aide de l'émetteur/récepteur 66.

Chaque circuit de traitement 42, 52 reçoit ce signal de paramétrage S0 et le décode. En parallèle, chaque circuit de traitement 42,52 détermine la valeur courante du paramètre mesuré par le ou les capteurs 31, 41 de son ensemble de mesure. Par suite, chaque circuit de traitement 42, 52 mémorise la valeur de référence lorsque cette valeur de référence est égale à la valeur courante déterminée plus ou moins une marge prédéterminée. Ainsi, chaque circuit de traitement 42, 52 mémorise la valeur de référence. Dès lors, n'importe quel contrôleur sera en mesure de mettre en œuvre par la suite une phase de mesure.

Eventuellement, chaque circuit de traitement 42, 52 émet en retour un signal de confirmation S3, S4, le gestionnaire 60 pouvant réceptionner et décoder ce signal de confirmation pour afficher sur l'afficheur 70 une symbologie indiquant que la mémorisation a été réalisée.

Dans la négative, un circuit de traitement 42, 52 peut émettre en retour un signal d'alerte S5, S6, le gestionnaire 60 pouvant réceptionner et décoder ce signal d'alerte pour afficher une alerte sur l'afficheur 70.

Selon la réalisation de la figure 1, le contrôleur 50 est configuré pour transmettre la valeur de référence à l'unique circuit de traitement, ce circuit de traitement étant configuré pour mémoriser dans sa mémoire la valeur de référence uniquement si cette valeur de référence est égale à une marge près aux valeurs courantes déterminées respectivement avec les ensembles de mesure. Le circuit de traitement reçoit à cet effet le signal de paramétrage S0 et le décode. En parallèle, le circuit de traitement détermine pour chaque ensemble de mesure la valeur courante du paramètre mesuré par le ou les capteurs 31, 41 de cet ensemble de mesure. Par suite, le circuit de traitement mémorise la valeur de référence lorsque cette valeur de référence est égale à chaque valeur courante déterminée plus ou moins une marge prédéterminée. Eventuellement, le circuit de traitement émet en retour un signal de confirmation, le gestionnaire 60 pouvant réceptionner et décoder ce signal de confirmation pour afficher sur l'afficheur 70 une symbologie indiquant que la mémorisation a été réalisée. Dans la négative, le circuit de traitement peut émettre en retour un signal d'alerte, le gestionnaire 60 pouvant réceptionner et décoder ce signal d'alerte pour afficher une alerte sur l'afficheur 70.

Quelle que soit la réalisation, avant mémorisation, le contrôleur 50 et le senseur 120 peuvent être configurés pour mettre en œuvre une phase interactive de vérification PHASVERIF nécessitant une intervention humaine. Le ou les circuits de traitement sont configurés pour mémoriser la valeur de référence seulement en fonction d'une issue positive de la phase interactive de vérification PHASVERIF.

Par exemple et selon le deuxième mode de réalisation, lors de la phase interactive de vérification PHASVERIF, le premier circuit de traitement 42 est configuré pour transmettre des cordonnées polaires (r, theta) au contrôleur 50. Le gestionnaire 60 pilote alors l'afficheur 70 pour afficher un curseur 76 à une position prédéterminée, par exemple au centre d'un référentiel ref à deux dimensions. De plus, le gestionnaire 60 est configuré pour piloter l'affichage d'une zone de validation 77 à l'emplacement requis par lesdites coordonnées polaires. Par exemple, un point de référence PTREF de la zone de validation 77 a pour coordonnées dans le référentiel ref lesdites coordonnées polaires. Selon l'exemple donné, un coin d'une zone de validation rectangulaire représente ce point de référence PTREF.

Dès lors, l'opérateur utilise l'interface homme-machine de déplacement 64 pour déplacer le curseur 76 selon deux directions orthogonales, à savoir selon quatre sens haut/bas/gauche/droite, par incréments de déplacement pour déplacer le curseur 76 dans la zone de validation 77. Le curseur 76 est déplacé selon l'exemple illustré d'un incrément à gauche puis de deux incréments vers le haut, les positions successives du curseur 76 étant illustrées en pointillés. Le gestionnaire 60 transmet alors un signal de déplacement porteur des deux nombres d'incréments de déplacement respectivement selon les deux directions, soit un incrément à gauche et deux incréments vers le haut selon l'exemple donné. Chaque circuit de traitement 42, 52 est configuré pour valider la mémorisation de la valeur de référence si les deux nombres d'incréments correspondent aux coordonnées polaires selon une loi mémorisée. Par exemple, le premier circuit de traitement 42 effectue cette vérification et en informe le deuxième circuit de traitement 52. En cas d'incohérence, un circuit de traitement peut émettre un signal d'alerte au contrôleur qui génère en conséquence une alerte.

Selon le premier mode de réalisation, l'unique circuit de traitement réalise les étapes précitées.

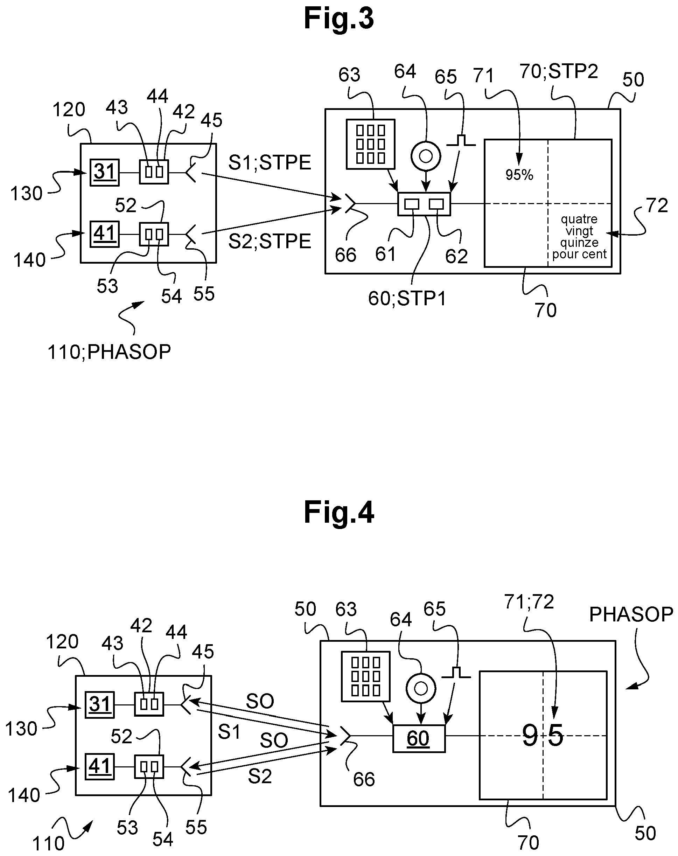

Selon un autre aspect du système de mesure 110 et en référence à la figure 3, durant une phase de mesure, chaque circuit de traitement 42, 52 encode un signal de mesure S1, S2. Par exemple, les signaux de mesure S1, S2 sont codés différemment.

Selon le premier mode de réalisation, seul l'unique circuit de traitement réalise ces actions.

Eventuellement, chaque signal de mesure S1, S2 est porteur de la valeur courante mesurée, par exemple sous la forme d'un pourcentage de la valeur de référence.

Le contrôleur 50 est configuré pour réceptionner, durant une étape STP1, les signaux de mesure S1, S2 émis par les circuits de traitement 42,52. Le gestionnaire 60 les décode, et pilote durant une étape STP2 l'affichage des symboles 71, 72 respectifs sur l'afficheur 70. Ainsi, un premier symbole 71 est porteur de la valeur courante mesurée par le premier ensemble de mesure 130, et un deuxième symbole est porteur de la valeur courante mesurée par le deuxième ensemble de mesure 140. Chaque symbole 71, 72 est donc fonction du signal de mesure S1, S2 respectif.

De plus, les symboles 71, 72 sont dissimilaires et/ou affichés alternativement au même endroit sur l'afficheur 70 pour permettre à un opérateur de détecter visuellement un dysfonctionnement. Les symboles 71,72 peuvent être affichés sous diverses formes.

Selon la première variante de la figure 3, le premier symbole 71 et le deuxième symbole 72 présentent une valeur, respectivement sous une forme numérique et une forme alphabétique. En particulier, le premier symbole 71 et le deuxième symbole 72 peuvent présenter la valeur courante sous la forme d'un pourcentage de la valeur de référence. En particulier, le premier symbole 71 prend la forme d'un nombre affiché sous une forme numérique alors que le deuxième symbole prend la forme d'une suite de lettres.

Selon la deuxième variante de la figure 4, le premier symbole 71 et le deuxième symbole 72 sont présentés sous la même forme. Le premier symbole 71 et le deuxième symbole 72 symbole peuvent prendre conjointement soit une forme numérique selon l'exemple illustré soit une forme alphabétique soit une forme graphique. Le premier symbole 71 et le deuxième symbole 72 sont en outre affichés alternativement à une même position sur l'afficheur 70.

Selon l'exemple donné, si le premier symbole 71 et le deuxième symbole 72 comportent le nombre 95, l'affichage sera stable. En revanche, si le premier symbole comporte le nombre 95 et le deuxième symbole comporte un nombre différent, le nombre 50 par exemple, l'opérateur va visuellement constater la présence d'un dysfonctionnement.

Eventuellement, le premier symbole 71 et le deuxième symbole 72 peuvent avoir des couleurs différentes.

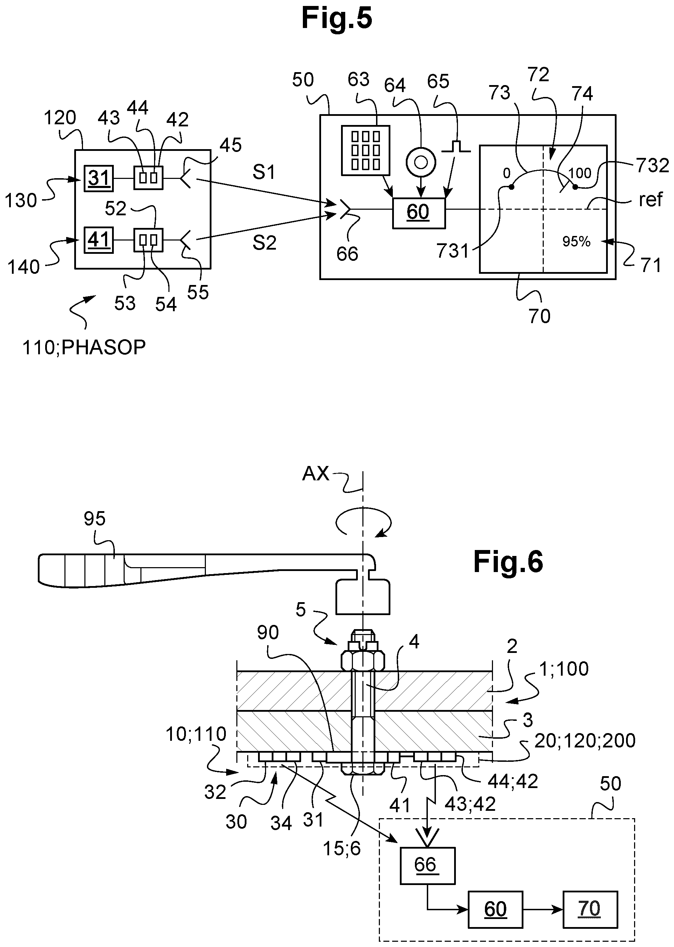

Selon la troisième variante de la figure 5, le premier symbole 71 peut afficher la valeur courante mesurée sous la forme d'un pourcentage de la valeur de référence associée écrit de manière numérique ou alphabétique. En revanche, le deuxième symbole 72 comporte un graphique. Un tel graphique est muni d'une échelle 73 et d'un index 74 pointant sur l'échelle 73 la valeur courante mesurée sous la forme d'un pourcentage de la valeur de référence associée.

Par exemple, le contrôleur 50, et éventuellement le gestionnaire 60, sont configurés pour transmettre au deuxième circuit de traitement 52 les coordonnées sur l'afficheur 70 d'un pixel de début 731 et d'un pixel de fin 732 de l'échelle 73. Le deuxième circuit de traitement 52, ou l'unique circuit de traitement selon le premier mode réalisation, est alors configuré pour calculer les coordonnées de l'index 74, en fonction des coordonnées du pixel de début 731 et du pixel de fin 732, de la valeur courante mesurée et de la valeur de référence mémorisée. A cet effet, le deuxième circuit de traitement peut comprendre une loi mathématique mémorisée fournissant les coordonnées de l'index 74. Le deuxième circuit de traitement 52 est alors configuré pour générer un deuxième signal de mesure S2 porteur des coordonnées calculées de l'index 74. Le gestionnaire 60 le reçoit et pilote en conséquence l'affichage de l'index 74.

Eventuellement, le contrôleur 50 peut comporter une interface homme-machine de sélection pour basculer d'une variante à une autre afin de conforter le diagnostic de l'opérateur.

Quelle que soit le mode de réalisation et la variante de l'invention, un tel système de mesure 10, 110 permet de limiter les risques d'être confrontés à une panne non détectable, en sécurisant la mémorisation de la valeur de référence lors de la phase d'initialisation, tout en sécurisant l'affichage d'informations lors d'une phase de mesure.

Eventuellement, un tel système de mesure 10, 110 peut être agencé sur tout assemblage mécanique tel des rails avec des traverses de voies ferrées, un châssis de manège ou de montagnes russes, un véhicule, voire en particulier un aéronef.

Plus précisément, la figure 6 illustre la possibilité d'agencer un tel système de mesure 10, 110 au sein d'un assemblage boulonné 1.

Un tel assemblage boulonné 1 peut comprendre au moins deux pièces mécaniques 2, 3 à serrer l'une contre l'autre. Pour serrer un assemblage 1, un système de vissage peut être utilisé. Le système de vissage est muni d'une potion filetée 4 ayant un filetage mâle à visser à un filetage femelle d'au moins un écrou 5.

Selon l'exemple illustré, la portion filetée 4 peut être solidaire d'une tête de vis 6 pour former une vis 15. Selon d'autres exemples, la portion filetée 4 peut être vissée à deux écrous ou peut être solidaire d'une des pièces mécaniques 2, 3 à serrer.

Le système de vissage peut aussi comporte un moyen de freinage.

Selon l'exemple illustré, l'écrou 5 est un écrou à créneaux coopérant avec une goupille traversant la portion filetée 4.

Cet assemblage boulonné 1 comporte alors le senseur 20, 120 d'un système de mesure 10, 110 selon l'invention pour évaluer une tension mécanique image d'un couple de serrage de l'assemblage boulonné 1. Par exemple, le senseur 20, 120 est agencé au sein d'une rondelle instrumentée. Par exemple, la rondelle instrumentée peut être serrée entre la tête 6 solidaire de la portion filetée 4 et la pièce 3.

La rondelle instrumentée peut en particulier comprendre un corps de rondelle 90 traversé par la portion filetée 4. Ce corps de rondelle 90 peut porter les capteurs 31, 41. Par exemple, chaque capteur 31, 41 est disposé sur une paroi latérale circonférentielle externe du corps de rondelle 90. Chaque capteur 31,41 peut comprendre une jauge de déformation configurée pour émettre un signal variant en fonction d'une déformation du corps de rondelle 90 due aux forces de serrage.

Lors de la phase d'initialisation, l'opérateur serre au couple de serrage requis l'écrou 5 avec une clé dynamométrique 95. De plus, l'opérateur saisit la valeur de référence avec le contrôleur 50. Si les valeurs courantes générées à partir des capteurs 31,41 ne correspondent pas à la valeur de référence, la phase d'initialisation échoue. La mémorisation de la valeur de référence n'est pas faite, et une alerte peut être générée.

Lors d'une phase de mesure, l'opérateur effectue une lecture de la valeur courante mesurée par les ensembles de mesure 30,40 à l'aide d'un contrôleur 50. En fonction des symboles 71,72 affichés, l'opérateur peut en déduire la présence éventuelle d'un dysfonctionnement du système de mesure 10, 110. Dans la négative, l'opérateur peut déterminer si l'assemblage boulonné 1 est toujours correctement serré.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Système de mesure (10, 110) comprenant un senseur (20, 120) et un contrôleur (50) configuré pour communiquer avec le senseur (20, 120), le contrôleur (50) comprenant un afficheur (70), le senseur (20, 120) comportant au moins deux ensembles de mesure (30, 40, 130, 140) et au moins un circuit de traitement (32, 42, 52), chaque ensemble de mesure (30, 40, 130, 140) comportant un ou plusieurs capteurs (31, 41), ledit au moins un circuit de traitement (32, 42, 52) étant connecté audit au moins un capteur (31, 41) de chaque ensemble de mesure (30, 40, 130, 140), ledit au moins un circuit de traitement (32, 42, 52) déterminant une valeur courante d'un même paramètre pour chaque ensemble de mesure (30, 40, 130, 140) à partir de signaux primaires émis par les capteurs (31, 41) des ensembles de mesure (30, 40, 130, 140), ledit au moins un circuit de traitement (32, 42, 52) étant configuré pour émettre vers le contrôleur (50) un signal de mesure (S1, S2) par ensemble de mesure (30, 40, 130, 140) fonction de ladite valeur courante déterminée à l'aide du ou des capteurs (31, 41) de cet ensemble de mesure (30, 40, 130, 140) et d'une valeur de référence mémorisée,
**caractérisé en ce que**, le contrôleur (50) est configuré pour :
i) transmettre (STP0) la valeur de référence audit au moins un circuit de traitement (32, 42, 52) lors d'une phase unique d'initialisation, ledit au moins un circuit de traitement (32, 42, 52) ayant une mémoire (33, 43, 53) configurée pour mémoriser la valeur de référence uniquement si la valeur de référence est égale à une marge près aux valeurs courantes ,
ii) réceptionner (STP1) les signaux de mesure (S1, S2) et afficher sur l'afficheur (70) des symboles (71, 72) respectifs lors d'une phase de mesure, chaque symbole (71, 72) étant fonction du signal de mesure (S1, S2) respectif, les symboles (71, 72) étant au moins dissimilaires ou affichés alternativement.

2. Système de mesure selon la revendication 1,
**caractérisé en ce que** ledit senseur (20) comporte un unique circuit de traitement (32) relié à chaque capteur (31, 41), ledit circuit de traitement (32) mettant en œuvre au moins deux processus internes dissimilaires pour générer au moins deux dits signaux de mesure (S1, S2), et **en ce que** lors de la phase d'initialisation ledit circuit de traitement (32) est configuré pour mémoriser la valeur de référence uniquement si la valeur de référence est égale à une marge près à chaque valeur courante.

3. Système de mesure selon la revendication 1,
**caractérisé en ce que** ledit senseur (120) comporte au moins deux circuits de traitement (42, 52) et deux ensembles de mesure (130, 140) respectifs, chaque circuit de traitement (42, 52) étant relié à au moins un capteur (31, 41) dudit ensemble de mesure (130, 140) respectif et générant l'un desdits signaux de mesure (S1, S2) en fonction de ladite valeur courante mesurée par ledit au moins un capteur (31, 41) de l'ensemble de mesure (130, 140) respectif et d'une valeur de référence mémorisée par ce circuit de traitement (42, 52), et **en ce que** lors de la phase d'initialisation chaque circuit de traitement (42, 52) est configuré pour mémoriser la valeur de référence uniquement si la valeur de référence est égale à une marge près à la valeur courante déterminée par ce circuit de traitement (42, 52).

4. Système de mesure selon l'une quelconque des revendications 1 à 3,
**caractérisé en ce que** le senseur (20, 120) est une rondelle instrumentée (200) configurée pour être agencée au sein d'un assemblage boulonné (1), ledit paramètre étant une tension mécanique image d'un couple de serrage.

5. Système de mesure selon l'une quelconque des revendications 1 à 4,
**caractérisé en ce que** les signaux de mesure (S1, S2) sont codés différemment.

6. Système de mesure selon l'une quelconque des revendications 1 à 5,
**caractérisé en ce que** lesdits symboles (71, 72) comportent un premier symbole (71) qui comprend un nombre affiché sous une forme numérique et un deuxième symbole (72) porteur d'un nombre affiché sous une forme alphabétique.

7. Système de mesure selon l'une quelconque des revendications 1 à 5,
**caractérisé en ce que** lesdits symboles (71, 72) comportent un premier symbole (71) et un deuxième symbole (72) présentés sous la même forme, ladite forme étant soit une forme numérique soit une forme alphabétique soit une forme graphique, le premier symbole et le deuxième symbole étant affichés alternativement à une même position sur l'afficheur (70).

8. Système de mesure selon la revendication 7,
**caractérisé en ce que** le premier symbole (71) et le deuxième symbole (72) sont de couleurs différentes.

9. Système de mesure selon l'une quelconque des revendications 1 à 5,
**caractérisé en ce que** lesdits symboles (71, 72) comportent un premier symbole (71) affichant la valeur courante associée sous la forme d'un pourcentage de la valeur de référence associée écrit de manière numérique ou alphabétique, le deuxième symbole (72) comportant une échelle (73) et un index (74) pointant sur l'échelle (73) la valeur courante associée sous la forme d'un pourcentage de la valeur de référence associée.

10. Système de mesure selon la revendication 9,
**caractérisé en ce que** le contrôleur (50) est configuré pour transmettre audit au moins un circuit de traitement (32, 42, 52) pilotant le deuxième symbole (72) des coordonnées sur l'afficheur (70) d'un pixel de début (731) et d'un pixel de fin (732) de ladite échelle (73), les signaux de mesure (S1, S2) émis par ledit au moins un circuit de traitement (32, 42, 52) étant porteurs de coordonnées dudit index (74) sur l'afficheur (70), ledit au moins un circuit de traitement (32, 42, 52) étant configuré pour déterminer lesdites cordonnées dudit index en fonction du pixel de début (731), du pixel de fin (732), de la valeur de référence mémorisée dans ledit au moins un circuit de traitement (32, 42, 52) et de la valeur courante déterminée pour chaque ensemble de mesure (30, 40, 130, 140).

11. Système de mesure selon l'une quelconque des revendications 1 à 10,
**caractérisé en ce que** si la valeur de référence n'est pas égale à une marge près à la valeur courante déterminée par ledit au moins un circuit de traitement (32, 42, 52), ledit au moins un circuit de traitement (32, 42, 52) est configuré pour ne pas mémoriser la valeur de référence et pour transmettre un signal d'alerte (S3, S4) lors de la phase d'initialisation.

12. Système de mesure selon l'une quelconque des revendications 1 à 11,
**caractérisé en ce que** lors de la phase d'initialisation le contrôleur (50) et le senseur (20) sont configurés pour mettre en œuvre une phase interactive de vérification (PHASVERIF) comprenant une manœuvre humaine d'au moins une interface (63, 64, 65) du contrôleur (50), ledit au moins un circuit de traitement (32, 42, 52) étant configuré pour mémoriser ladite valeur de référence en fonction d'une issue de la phase interactive de vérification (PHASVERIF).

13. Système de mesure selon la revendication 12,
**caractérisé en ce que** lors de la phase interactive de vérification (PHASVERIF), ledit au moins un circuit de traitement (32, 42, 52) est configuré pour transmettre des cordonnées polaires (r, theta) au contrôleur (50) par rapport à un référentiel (ref) de l'afficheur (70), le contrôleur (50) étant configuré pour afficher sur l'afficheur (70) un curseur (76) à une position prédéterminée et une zone de validation (77), un point de référence (PTREF) de la zone de validation (77) ayant pour coordonnées dans le référentiel lesdites coordonnées polaires, le contrôleur (50) ayant une interface homme-machine de déplacement (64) déplaçant le curseur (76) selon deux directions orthogonales par incrément de déplacement pour permettre à un utilisateur de placer le curseur (76) dans la zone de validation (77), le contrôleur (50) ayant une interface homme-machine de validation (65), le contrôleur (50) étant configuré suite à une sollicitation de l'interface homme-machine de validation (65) pour transmettre audit senseur (20, 120) deux nombres d'incréments de déplacement respectivement selon les deux directions, ledit au moins un circuit de traitement (32, 42, 52) étant configuré pour valider la mémorisation si les deux nombres d'incréments correspondent aux coordonnées polaires selon une loi mémorisée.

14. Véhicule (100),
**caractérisé en ce que** le véhicule (100) comporte un système de mesure (10, 110) selon l'une quelconque des revendications 1 à 13.

15. Procédé de mesure pour mesurer un paramètre avec un senseur (20, 120) et un contrôleur (50) configuré pour communiquer avec le senseur (20, 120), le contrôleur (50) comprenant un afficheur (70), le senseur (20, 120) comportant au moins deux ensembles de mesure (30, 40, 130, 140) et au moins un circuit de traitement (32, 42, 52), chaque ensemble de mesure (30, 40, 130, 140) comportant un ou plusieurs capteurs (31, 41), ledit au moins un circuit de traitement (32, 42, 52) étant connecté audit au moins un capteur (31, 41) de chaque ensemble de mesure (30, 40, 130, 140), ledit au moins un circuit de traitement (32, 42, 52) déterminant une valeur courante d'un même paramètre pour chaque ensemble de mesure (30, 40, 130, 140) à partir de signaux primaires émis par les capteurs (31, 41) des ensembles de mesure (30, 40, 130, 140), ledit au moins un circuit de traitement (32, 42, 52) étant configuré pour émettre vers le contrôleur (50) un signal de mesure (S1, S2) par ensemble de mesure (30, 40, 130, 140) fonction de ladite valeur courante déterminée à l'aide du ou des capteurs (31, 41) de cet ensemble de mesure (30, 40, 130, 140) et d'une valeur de référence mémorisée,
**caractérisé en ce que** le procédé comporte les étapes suivantes:
i) lors d'une phase d'initialisation, transmission (STP0) avec le contrôleur (50) de ladite valeur de référence audit au moins un circuit de traitement (32, 42, 52) du senseur (20, 120), et pour ledit au moins un circuit de traitement (32, 42, 52) : mémorisation (STPM) dans une mémoire (33, 43, 53) dudit au moins un circuit de traitement (32, 42, 52) de la valeur de référence uniquement si la valeur de référence est égale à une marge près aux valeurs courantes,
ii) lors d'une phase de mesure, émission (STPE) des signaux de mesure (S1, S2) par ledit au moins un circuit de traitement (32, 42, 52) et réception (STP1) des signaux de mesure (S1, S2) par le contrôleur (50), puis affichage (STP2) sur l'afficheur (70) d'au moins un symbole par signal de mesure (S1, S2), chaque symbole (71, 72) étant fonction du signal de mesure (S1, S2) respectif, les symboles (71, 72) étant au moins dissimilaires ou affichés alternativement.

## Patentansprüche

1. Messsystem (10, 110) mit einem Sensor (20, 120) und einer Steuereinheit (50), die konfiguriert ist, um mit dem Sensor (20, 120) zu kommunizieren, wobei die Steuereinheit (50) eine Anzeigevorrichtung (70) umfasst, wobei der Sensor (20, 120) mindestens zwei Messanordnungen (30, 40, 130, 140) und mindestens eine Verarbeitungsschaltung (32, 42, 52) umfasst, wobei jede Messanordnung (30, 40, 130, 140) einen oder mehrere Messaufnehmer (31, 41) umfasst, wobei die mindestens eine Verarbeitungsschaltung (32, 42, 52) mit dem mindestens einen Messaufnehmer (31, 41) jeder Messanordnung (30, 40, 130, 140) verbunden ist, wobei die mindestens eine Verarbeitungsschaltung (32, 42, 52) für jede Messanordnung (30, 40, 130, 140) einen aktuellen Wert desselben Parameters aus den von den Messaufnehmern (31, 41) der Messanordnungen (30, 40, 130, 140) erzeugten Primärsignalen einen aktuellen Wert desselben Parameters für jede Messanordnung (30, 40, 130, 140) ermittelt, wobei die mindestens eine Verarbeitungsschaltung (32, 42, 52) konfiguriert ist, um pro Messanordnung (30, 40, 130, 140) an die Steuereinheit (50) ein Messsignal (S1, S2) zu senden, das von dem mithilfe des Messaufnehmers bzw. der Messaufnehmer (31, 41) dieser Messanordnung (30, 40, 130, 140) ermittelten aktuellen Wert und einem gespeicherten Referenzwert abhängt,
**dadurch gekennzeichnet, dass** die Steuereinheit (50) konfiguriert ist, um:
i) in einer einmaligen Initialisierungsphase den Referenzwert an die mindestens eine Verarbeitungsschaltung (32, 42, 52) zu übermitteln (STP0), wobei die mindestens eine Verarbeitungsschaltung (32, 42, 52) über einen Speicher (33, 43, 53) verfügt, der konfiguriert ist, um den Referenzwert nur dann zu speichern, wenn der Referenzwert den aktuellen Werten bis auf einen gewissen Toleranzbereich entspricht,
ii) die Messsignale (S1, S2) zu empfangen (STP1) und in einer Messphase auf der Anzeigevorrichtung (70) jeweilige Symbole (71, 72) anzuzeigen, wobei jedes Symbol (71, 72) vom jeweiligen Messsignal (S1, S2) abhängt und die Symbole (71, 72) zumindest unterschiedlich sind oder abwechselnd angezeigt werden.

2. Messsystem nach Anspruch 1,
**dadurch gekennzeichnet, dass** der Sensor (20) eine einzige, mit jedem Messaufnehmer (31, 41) verbundene Verarbeitungsschaltung (32) umfasst, wobei die Verarbeitungsschaltung (32) mindestens zwei unterschiedliche interne Prozesse zur Erzeugung von mindestens zwei der Messsignale (S1, S2) ausführt, und dass die Verarbeitungsschaltung (32) während der Initialisierungsphase konfiguriert ist, um den Referenzwert nur dann zu speichern, wenn der Referenzwert bis auf einen Toleranzbereich jedem aktuellen Wert entspricht.

3. Messsystem nach Anspruch 1,
**dadurch gekennzeichnet, dass** der Sensor (120) mindestens zwei Verarbeitungsschaltungen (42, 52) und zwei jeweilige Messanordnungen (130, 140) umfasst, wobei jede Verarbeitungsschaltung (42, 52) mit mindestens einem Messaufnehmer (31, 41) der jeweiligen Messanordnung (130, 140) verbunden ist und eines der Messsignale (S1, S2) in Abhängigkeit von dem durch den mindestens einen Messaufnehmer (31, 41) der jeweiligen Messanordnung (130, 140) gemessenen aktuellen Wert und einem von dieser Verarbeitungsschaltung (42, 52) gespeicherten Referenzwert erzeugt, und dass während der Initialisierungsphase jede Verarbeitungsschaltung (42, 52) konfiguriert ist, um den Referenzwert nur dann zu speichern, wenn der Referenzwert bis auf einen Toleranzbereich dem von dieser Verarbeitungsschaltung (42, 52) ermittelten aktuellen Wert entspricht.

4. Messsystem nach einem der Ansprüche 1 bis 3,
**dadurch gekennzeichnet, dass** der Sensor (20, 120) eine Messscheibe (200) ist, die dazu ausgelegt ist, in einer Schraubverbindung (1) angeordnet zu werden, wobei der Parameter eine mechanische Spannung ist, die ein Anzugsmoment widerspiegelt.

5. Messsystem nach einem der Ansprüche 1 bis 4,
**dadurch gekennzeichnet, dass** die Messsignale (S1, S2) unterschiedlich codiert sind.

6. Messsystem nach einem der Ansprüche 1 bis 5,
**dadurch gekennzeichnet, dass** die Symbole (71, 72) ein erstes Symbol (71), das eine in numerischer Form angezeigte Zahl umfasst, und ein zweites Symbol (72) umfassen, das eine in alphabetischer Form angezeigte Zahl trägt.

7. Messsystem nach einem der Ansprüche 1 bis 5,
**dadurch gekennzeichnet, dass** die Symbole (71, 72) ein erstes Symbol (71) und ein zweites Symbol (72) umfassen, die in derselben Form dargestellt sind, wobei diese Form entweder eine numerische, eine alphabetische oder eine grafische Form ist, und dass das erste Symbol und das zweite Symbol abwechselnd an derselben Position auf der Anzeigevorrichtung (70) angezeigt werden.

8. Messsystem nach Anspruch 7,
**dadurch gekennzeichnet, dass** das erste Symbol (71) und das zweite Symbol (72) unterschiedliche Farben aufweisen.

9. Messsystem nach einem der Ansprüche 1 bis 5,
**dadurch gekennzeichnet, dass** die Symbole (71, 72) ein erstes Symbol (71) umfassen, das den zugehörigen aktuellen Wert in Form eines numerisch oder alphabetisch angegebenen Prozentsatzes des zugehörigen Referenzwerts anzeigt, und dass das zweite Symbol (72) eine Skala (73) und einen Zeiger (74) umfasst, der auf der Skala (73) den zugehörigen aktuellen Wert in Form eines Prozentsatzes des zugehörigen Referenzwerts anzeigt.

10. Messsystem nach Anspruch 9,
**dadurch gekennzeichnet, dass** die Steuereinheit (50) konfiguriert ist, um an die mindestens eine Verarbeitungsschaltung (32, 42, 52), die das zweite Symbol (72) steuert, die Koordinaten eines Startpixels (731) und eines Endpixels (732) der Skala (73) auf der Anzeigevorrichtung (70) zu übertragen, dass die von der mindestens einen Verarbeitungsschaltung (32, 42, 52) abgegebenen Messsignale (S1, S2) Koordinaten des Zeigers (74) auf der Anzeigevorrichtung (70) enthalten, und dass die mindestens eine Verarbeitungsschaltung (32, 42, 52) konfiguriert ist, um die Koordinaten des Zeigers in Abhängigkeit vom Startpixel (731), vom Endpixel (732), vom in der mindestens einen Verarbeitungsschaltung (32, 42, 52) gespeicherten Referenzwert und dem für jede Messanordnung (30, 40, 130, 140) ermittelten aktuellen Wert zu bestimmen.

11. Messsystem nach einem der Ansprüche 1 bis 10,
**dadurch gekennzeichnet, dass**, wenn in der Initialisierungsphase der Referenzwert nicht bis auf einen Toleranzbereich dem von der mindestens einen Verarbeitungsschaltung (32, 42, 52) ermittelten aktuellen Wert entspricht, die mindestens eine Verarbeitungsschaltung (32, 42, 52) konfiguriert ist, um den Referenzwert nicht zu speichern und ein Warnsignal (S3, S4) zu senden.

12. Messsystem nach einem der Ansprüche 1 bis 11,
**dadurch gekennzeichnet, dass** in der Initialisierungsphase die Steuereinheit (50) und der Sensor (20) konfiguriert sind, um eine interaktive Überprüfungsphase (PHASVERIF) durchführen, die eine manuelle Bedienung mindestens einer Schnittstelle (63, 64, 65) der Steuereinheit (50) umfasst, und dass die mindestens eine Verarbeitungsschaltung (32, 42, 52) konfiguriert ist, um den Referenzwert in Abhängigkeit von einem Ergebnis der interaktiven Verifizierungsphase (PHASVERIF) zu speichern.

13. Messsystem nach Anspruch 12,
**dadurch gekennzeichnet, dass** während der interaktiven Verifizierungsphase (PHASVERIF) die mindestens eine Verarbeitungsschaltung (32, 42, 52) konfiguriert ist, um Polarkoordinaten (r, theta) in Bezug auf ein Koordinatensystem (ref) der Anzeigevorrichtung (70) an die Steuereinheit (50) zu senden, dass die Steuereinheit (50) konfiguriert ist, um auf der Anzeigevorrichtung (70) einen Cursor (76) an einer vorgegebenen Position und einen Validierungsbereich (77) anzuzeigen, wobei ein Referenzpunkt (PTREF) des Validierungsbereichs (77) in dem Koordinatensystem die besagten Polarkoordinaten als Koordinaten aufweist, dass die Steuereinheit (50) über eine Mensch-Maschine-Verschiebungsschnittstelle (64) verfügt, die den Cursor (76) in zwei orthogonalen Richtungen in Bewegungsinkrementen verschiebt, um es einem Benutzer zu ermöglichen, den Cursor (76) in dem Validierungsbereich (77) zu platzieren, dass die Steuereinheit (50) eine Validierungs-Mensch-Maschine-Schnittstelle (65) aufweist und die Steuereinheit (50) konfiguriert ist, um nach einer Anforderung über die Validierungs-Mensch-Maschine-Schnittstelle (65) an den Sensor (20, 120) zwei Zahlen von Bewegungsinkrementen jeweils in den beiden Richtungen zu übermitteln, und dass die mindestens eine Verarbeitungsschaltung (32, 42, 52) konfiguriert ist, dass sie die Speicherung zu validieren, wenn die beiden Inkrementzahlen gemäß einer gespeicherten Regel den Polarkoordinaten entsprechen.

14. Verkehrsmittel (100),
**dadurch gekennzeichnet, dass** das Verkehrsmittel (100) ein Messsystem (10, 110) gemäß einem der Ansprüche 1 bis 13 umfasst.

15. Messverfahren zum Messen eines Parameters mit einem Sensor (20, 120) und einer Steuereinheit (50), die zur Kommunikation mit dem Sensor (20, 120) ausgelegt ist, wobei die Steuereinheit (50) eine Anzeigevorrichtung (70) umfasst, der Sensor (20, 120) mindestens zwei Messanordnungen (30, 40, 130, 140) und mindestens eine Verarbeitungsschaltung (32, 42, 52) umfasst, jede Messanordnung (30, 40, 130, 140) einen oder mehrere Messaufnehmer (31, 41) umfasst, die mindestens eine Verarbeitungsschaltung (32, 42, 52) mit dem mindestens einen Messaufnehmer (31, 41) jeder Messanordnung (30, 40, 130, 140) verbunden ist, die mindestens eine Verarbeitungsschaltung (32, 42, 52) für jede Messanordnung (30, 40, 130, 140) einen aktuellen Wert desselben Parameters anhand von Primärsignalen ermittelt, die von den Messaufnehmern (31, 41) der Messanordnungen (30, 40, 130, 140) abgegeben werden, wobei die mindestens eine Verarbeitungsschaltung (32, 42, 52) konfiguriert ist, um an die Steuereinheit (50) pro Messanordnung (30, 40, 130, 140) ein Messsignal (S1, S2) zu senden, das von dem mit Hilfe des oder der Messaufnehmer (31, 41) dieser Messanordnung (30, 40, 130, 140) ermittelten aktuellen Wert und von einem gespeicherten Referenzwert abhängt,
**dadurch gekennzeichnet, dass** das Verfahren die folgenden Schritte umfasst:
i) in einer Initialisierungsphase, Übertragen (STP0) des Referenzwerts durch die Steuereinheit (50) an die mindestens eine Verarbeitungsschaltung (32, 42, 52) des Sensors (20, 120) und durch die mindestens eine Verarbeitungsschaltung (32, 42, 52) Speichern (STPM) des Referenzwerts in einem Speicher (33, 43, 53) der mindestens einen Verarbeitungsschaltung (32, 42, 52) nur dann, wenn der Referenzwert bis auf einen Toleranzbereich den aktuellen Werten entspricht,
ii) in einer Messphase, Aussenden (STPE) der Messsignale (S1, S2) durch die mindestens eine Verarbeitungsschaltung (32, 42, 52) und Empfangen (STP1) der Messsignale (S1, S2) durch die Steuereinheit (50), anschließend Anzeigen (STP2) von mindestens einem Symbol pro Messsignal (S1, S2) auf der Anzeigevorrichtung (70), wobei jedes Symbol (71, 72) vom jeweiligen Messsignal (S1, S2) abhängt und die Symbole (71, 72) zumindest unterschiedlich sind oder abwechselnd angezeigt werden.

## Claims

1. Measurement system (10, 110) comprising a sensor (20, 120) and a controller (50) configured to communicate with the sensor (20, 120), the controller (50) comprising a display unit (70), the sensor (20, 120) having at least two measurement sets (30, 40, 130, 140) and at least one processing circuit (32, 42, 52), each measurement set (30, 40, 130, 140) having one or more sensors (31, 41), said at least one processing circuit (32, 42, 52) being connected to said at least one sensor (31, 41) of each measurement set (30, 40, 130, 140), said at least one processing circuit (32, 42, 52) determining a current value of one same parameter for each measurement set (30, 40, 130, 140) from primary signals transmitted by the sensors (31, 41) of the measurement sets (30, 40, 130, 140), said at least one processing circuit (32, 42, 52) being configured to transmit to the controller (50), one measurement signal (S1, S2) per measurement set (30, 40, 130, 140) as a function of said current value determined using the sensor(s) (31, 41) of this measurement set (30, 40, 130, 140) and a stored reference value,
**characterised in that**, the controller (50) is configured to:
i) transmitting (STP0) the reference value to said at least one processing circuit (32, 42, 52) during one single initialisation phase, said at least one processing circuit (32, 42, 52) having a memory (33, 43, 53) configured to store the reference value only if the reference value is equal to within a margin of the current values,
ii) receiving (STP1) the measurement signals (S1, S2) and displaying on the display unit (70), respective symbols (71, 72) during a measurement phase, each symbol (71, 72) being a function of the respective measurement signal (S1, S2), the symbols (71, 72) being at least dissimilar or alternately displayed.

2. Measurement system according to claim 1,
**characterised in that** said sensor (20) has one single processing circuit (32) connected to each sensor (31, 41), said processing circuit (32) implementing at least two dissimilar internal processes to generate at least two said measurement signals (S1, S2), and **in that** during the initialisation phase, said processing circuit (32) is configured to store the reference value, only if the reference value is equal to within a margin of each current value.

3. Measurement system according to claim 1,
**characterised in that** said sensor (120) has at least two processing circuits (42, 52) and two respective measurement sets (130, 140), each processing circuit (42, 52) being connected to at least one sensor (31, 41) of said respective measurement set (130, 140) and generating one of said measurement signals (S1, S2) as a function of said current value measured by said at least one sensor (31, 41) of the respective measurement set (130, 140) and of a reference value stored by this processing circuit (42, 52), and **in that** during the initialisation phase, each processing circuit (42, 52) is configured to store the reference value only if the reference value is equal to within a margin of the current value determined by this processing circuit (42, 52).

4. Measurement system according to any one of claims 1 to 3,
**characterised in that** the sensor (20, 120) is an instrumented washer (200), configured to be arranged within a bolted assembly (1), said parameter being a mechanical tension like a tightening torque.

5. Measurement system according to any one of claims 1 to 4,
**characterised in that** the measurement signals (S1, S2) are differently coded.

6. Measurement system according to any one of claims 1 to 5,
**characterised in that** said symbols (71, 72) have a first symbol (71) which comprises a number displayed in numerical form and a second symbol (72) carrying a number displayed in alphabetical form.

7. Measurement system according to any one of claims 1 to 5,
**characterised in that** said symbols (71, 72) have a first symbol (71) and a second symbol (72) presented in the same form, said form being either a numerical form or an alphabetic form or a graphic form, the first symbol and the second symbol being displayed alternately at one same position on the display unit (70).

8. Measurement system according to claim 7,
**characterised in that** the first symbol (71) and the second symbol (72) are of different colours.

9. Measurement system according to any one of claims 1 to 5,
**characterised in that** said symbols (71, 72) have a first symbol (71) displaying the associated current value in the form of a percentage of the associated reference value written numerically or alphabetically, the second symbol (72) having a scale (73) and an index (74) pointing on the scale (73), the associated current value in the form of a percentage of the associated reference value.

10. Measurement system according to claim 9,
**characterised in that** the controller (50) is configured to transmit to said at least one processing circuit (32, 42, 52) controlling the second symbol (72) of the coordinates on the display unit (70) of a start pixel (731) and an end pixel (732) of said scale (73), the measurement signals (S1, S2) transmitted by said at least one processing circuit (32, 42, 52) carrying coordinates of said index (74) on the display unit (70), said at least one processing circuit (32, 42, 52) being configured to determine said coordinates of said index as a function of the start pixel (731), the end pixel (732), the reference value stored in said at least one processing circuit (32, 42, 52) and the current value determined for each measurement set (30, 40, 130, 140).

11. Measurement system according to any one of claims 1 to 10,
**characterised in that** if the reference value is not equal to within a margin of the current value determined by said at least one processing circuit (32, 42, 52), said at least one processing circuit (32, 42, 52) is configured not to store the reference value and to transmit an alert signal (S3, S4) during the initialisation phase.

12. Measurement system according to any one of claims 1 to 11,
**characterised in that** during the initialisation phase the controller (50) and the sensor (20) are configured to implement an interactive verification phase (PHASVERIF) comprising a human operation of at least one interface (63, 64, 65) of the controller (50), said at least one processing circuit (32, 42, 52) being configured to store said reference value as a function of an outcome of the interactive verification phase (PHASVERIF).

13. Measurement system according to claim 12,
**characterised in that** during the interactive verification phase (PHASVERIF), said at least one processing circuit (32, 42, 52) is configured to transmit polar coordinates (r, theta) to the controller (50) with respect to a reference (ref) of the display unit (70), the controller (50) being configured to display on the display unit (70), a cursor (76) at a predetermined position and an validation zone (77), a reference point (PTREF) of the validation zone (77) having as coordinates in the reference point, said polar coordinates, the controller (50) having a displacement man-machine interface (64) moving the cursor (76) in two orthogonal directions by displacement increments to enable a user to place the cursor (76) in the validation zone (77), the controller (50) having a validation man-machine interface (65), the controller (50) being configured following a request of the validation man-machine interface (65) to transmit to said sensor (20, 120), two numbers of displacement increments respectively along the two directions, said at least one processing circuit (32, 42, 52) being configured to validate the storage if the two numbers of increments correspond to the polar coordinates according to a stored law.

14. Vehicle (100),
**characterised in that** the vehicle (100) has a measurement system (10, 110) according to any one of claims 1 to 13.

15. Measurement method for measuring a parameter with a sensor (20, 120) and a controller (50) configured to communicate with the sensor (20, 120), the controller (50) comprising a display unit (70), the sensor (20, 120) having at least two measurement sets (30, 40, 130, 140) and at least one processing circuit (32, 42, 52), each measurement set (30, 40, 130, 140) having one or more sensors (31, 41), the at least one processing circuit (32, 42, 52) is connected to the at least one sensor (31, 41) of each measurement set (30, 40, 130, 140), the at least one processing circuit (32, 42, 52) determines a current value of one same parameter for each measurement set (30, 40, 130, 140) from primary signals transmitted by the sensors (31, 41) of the measurement sets (30, 40, 130, 140), the at least one processing circuit (32, 42, 52) is configured to transmit to the controller (50), one measurement signal (S1, S2) per measurement set (30, 40, 130, 140) as a function of said current value determined using the sensor(s) (31, 41) of this measurement set (30, 40, 130, 140) and a stored reference value,
**characterised in that** the method has the following steps:
i) during an initialisation phase, transmission (STP0) with the controller (50) of said reference value to said at least one processing circuit (32, 42, 52) of the sensor (20, 120), and for said at least one processing circuit (32, 42, 52): storage (STPM) in a memory (33, 43, 53) of said at least one processing circuit (32, 42, 52) of the reference value, only if the reference value is equal to a margin within the current values,
ii) during a measurement phase, transmitting (STPE) the measurement signals (S1, S2) by said at least one processing circuit (32, 42, 52) and receiving (STP1) the measurement signals (S1, S2) by the controller (50), then displaying (STP2) on the display unit (70), at least one symbol per measurement signal (S1, S2), each symbol (71, 72) being a function of the respective measurement signal (S1, S2), the symbols (71, 72) being at least dissimilar or displayed alternately.
